# EUROPÄISCHE PATENTSCHRIFT

(11) **EP 0 603 534 B1**
(45) Veröffentlichungstag und Bekanntmachung des Hinweises auf die Patenterteilung: **16.04.1997**
(21) Anmeldenummer: 93118369.3
(22) Anmeldetag: 12.11.1993
(51) Int. Cl.: B23H 7/02, B23H 7/26, B23H 11/00, G05B 19/18

(54) **Vorrichtung und Verfahren zum elektroerosiven Schneiden**
Method and apparatus for electro-erosion cutting
Dispositif et procédé pour le découpage par électro-érosion

(30) Priorität: 21.12.1992 DE 4243393
(43) Veröffentlichungstag der Anmeldung: 29.06.1994
(73) Patentinhaber: A.G. für industrielle Elektronik AGIE Losone bei Locarno, CH-6616 Losone (CH)
(72) Erfinder: Sciaroni, Boris, CH-6604 Locarno (CH)
(74) Vertreter: Turi, Michael, Dipl.-Phys.

(56) Entgegenhaltungen:
- DE-A- 3 924 748
- US-A- 4 885 449
- US-A- 4 928 019
- ROBOTICS AND COMPUTER INTEGRATED MANUFACTURING, Bd.7, Nr.3/4, 1990, ELMSFORD NY USA Seiten 357 - 364, XP000178810 K.F.EHMANN 'Solution principles for a new generation of precision self-correcting multi-axis machines'
- PATENT ABSTRACTS OF JAPAN vol. 012, no. 018 (M-660) 20. Januar 1988 & JP-A-62 176 735 (MITSUBISHI ELECTRIC CORP.) 3. August 1987
- PATENT ABSTRACTS OF JAPAN vol. 012, no. 160 (M-697) 14. Mai 1988 & JP-A-62 277 222 (MITSUBISHI ELECTRIC CORP.) 2. Dezember 1987

## Beschreibung

Die Erfindung betrifft eine Vorrichtung zum elektroerosiven Bearbeiten eines Werkstückes, insbesondere zum elektroerosiven Schneiden eines auf einem Maschinentisch befestigbaren Werkstückes mit einem in wenigstens einer Drahtführung geführten Erodierdraht, wobei der Maschinentisch in X-, Y-Richtung und wenigstens eine Drahtführung hierzu in U-, V-Richtung bewegbar ist, gemäß dem Oberbegriff des Anspruchs 1, und ein entsprechendes Verfahren gemäß dem Oberbegriff des Anspruches 10.

Ein sehr wichtiger Aspekt der elektroerosiven Bearbeitung, auch Funkenerosion genannt, ist die Schnittgenauigkeit. Wie bei jeder Art mechanischer Bewegung treten auch in der Funkenerosion beim Bearbeiten bzw. Schneiden einer geometrischen Sollkontur stets Abweichungen und Fehler auf. Ein Grundanliegen bei der Weiterentwicklung der Funkenerosion ist daher die Minimierung dieser Abweichungen.

Elektroerosionsvorrichtungen und -verfahren sind bereits mit verschiedenster Genauigkeit bekannt. So gibt es beispielsweise relativ teuere "Very High Precision-Maschinen", die bis in den µm-Bereich hinein genau arbeiten. Eine hohe Bearbeitungsgenauigkeit läßt sich dabei u.a. mit Hilfe einer möglichst stabilen und schwingungsfreien Mechanik realisieren. Zusätzlich (oder alternativ) ist es bekannt, die Bearbeitungsgenauigkeit durch spezielle Korrekturstrategien (auf Softwarebasis) beispielsweise bei Eckenschnitten oder mit Drahtlagesensoren zu erhöhen (siehe z.B. die DE 30 48 631 bzw. die US 4,423,347).

Ein besonderer Vorteil von Eckschnittstrategien und Drahtlagesensoren ist dabei darin zu sehen, daß es mit ihrer Hilfe möglich ist, die Genauigkeit einer Elektroerosionsvorrichtung unabhängig von der Güte ihrer Mechanik zu erhöhen. Mit Drahtlagesensoren ist es zudem möglich, das Verhältnis zwischen Bearbeitungsgenauigkeit und Bearbeitungsgeschwindigkeit bzw. die Bearbeitungsgeschwindigkeit bei gleichbleibender oder höherer Schnittgenauigkeit zu erhöhen. Mit den bekannten Schnittstrategien können ferner Positionierungsfehler, Fehler bei einer lineraren Bewegung und relative Fehler zu anderen Achsen ausgemessen und korrigiert bzw. kompensiert werden.

Aus der gattungsgemäßen Druckschrift US-A-4,885,449 ist eine Drahterosionsmaschine und ein Verfahren bekannt, bei der/dem lineare Fehler, also sogenannte Fehler erster Ordnung, wie beispielsweise Spindelsteigungsfehler und Umkehrspiel kompensiert werden sollen. Dazu werden zunächst die Drahterosionsmaschinen unter unterschiedlichen Belastungen ausgemessen, woraufhin die zum Ausgleich dieser Fehler erforderlichen Korrekturen vorab als Daten in der Drahterosionsmaschine abgespeichert werden.

Aus der JP-A-62-277222 ist die Korrektur der Positionsungenauigkeiten eines Werktisches mit darauf befindlichem Werkstück bekannt. Ein Lasermeßsystem erfaßt dabei die Verschiebung des Drahtes von einer Bearbeitung zur nächsten und korrigiert bei Bedarf die Position. Schließlich ist es noch aus der JP-A 62-176735 bekannt, bei einer Drahterosionsmaschine die Temperatur verschiedener Maschinenbauteile zu überwachen, um bei unterschiedlicher thermischer Belastung dieser Maschinenteile Korrekturen vorzunehmen. Die daraus resultierende Ausdehnung des Maschinenkörpers wird dann dadurch kompensiert, daß zuvor gespeicherte Korrekturwerte entsprechend der erfaßten Temperaturdaten zu den Positionsdaten bzw. zum Verfahrweg hinzu addiert werden.

Die Erfindung zielt darauf ab, weitere bei der Elektroerosion auftretende, sich auf die Genauigkeit bei der Bearbeitung auswirkende, Fehlerquellen zu verkleinern bzw. zu vermindern.

Die Erfindung erreicht dieses Ziel im Hinblick auf die gattungsgemäße Vorrichtung durch eine Einrichtung zur Mesung während der Bearbeitung auftretender Rotationsfehler des Maschinentisches gegenüber seiner Sollage, sowie eine Einrichtung zur kontinuierlichen Kompensation dieser Rotationsfehler des Maschinentisches durch Steuerung der entsprechenden Drahtführung in U-, V-Richtung. Zudem erreicht die Erfindung dieses Ziel bei einem gattungsgemäßen Verfahren dadurch, daß während der Bearbeitung des Werkstückes auftretende Rotationsfehler des Maschinentisches gegenüber seiner Sollage ermittelt und durch eine Bewegung der wenigstens einen Drahtführung in U-, V-Richtung kontinuierlich kompensiert werden.

Eine Grundidee der Erfindung besteht demnach darin, unerwünschte Bewegungen des Vorrichtungs- bzw. Maschinenteiles, an dem das Werkstück befestigt ist (also üblicherweise der sogenannte "Maschinentisch"), gegenüber dem Maschinenteil, der das Bearbeitungswerkzeug (insbesondere den Erodierdraht) trägt bzw. gegenüber einem Maschinensockel zu ermitteln und zu kompensieren. Das Ermitteln der unerwünschten Bewegungen erfolgt vorzugsweise mit Hilfe einer Messeinrichtung, die z.B. derart ausgelegt ist, daß mit ihrer Hilfe relative Verschiebungen und Verdrehungen des Maschinentisches zu seiner Sollage ausmessbar sind.

Die unerwünschten Bewegungen werden nach der Erfindung einmalig am Ende des Produktionsablaufes bei vorbestimmten Konditionen, z.B. bei belastetem Bearbeitungstisch ausgemessen und elektronisch in einem Speicher - z.B. einem oder mehreren EPROM(S) - gespeichert. Es ist zusätzlich möglich, aus den ausgemessenen unerwünschten Bewegungen einmalig Kompensationsbewegungen zu berechnen und diese abzuspeichern. Die Kompensationseinrichtung beschränkt sich dann auf ein Abrufen und Durchführen vorgespeicherter Kompensationsbewegungen.

Ein besonderer Vorteil des einmaligen Ausmessens der unerwünschten Bewegungen sind die gegenüber dem Stand der Technik praktisch gleichbleibenden Maschinenkosten, denn eine zusätzliche Messeinrichtung entfällt bzw. wird nach dem einmaligen Ermitteln der unerwünschten Bewegungen wieder von der Maschine entfernt.

Bei einer Variante der Erfindung wird die Messeinrichtung permanent in die Maschine integriert. Damit ist es möglich, die während der erosiven Bearbeitung ständig auftretenden unerwünschten Bewegungen des Maschinentisches genauestens zu erfassen und besonders präzise zu kompensieren.

Von besonderem Interesse bei der Kompensation der unerwünschten Bewegungen sind die "Verdrehungen" des Maschinentisches gegenüber einer der Maschinen(soll)achsen X, Y, Z. Derartige Verdrehungen führen zwar nicht immer oder nur "teilweise" zu einem Schnittfehler. Dreht sich der Maschinentisch beispielsweise um die Erodierdrahtachse oder neigt er sich genau in Schnittrichtung, treten zumindest augenblicklich keine Bearbeitungsfehler auf. Es ist aber beispielsweise möglich, daß der Erodierdraht bei Verdrehungen um eine Achse, die parallel zur Schnittrichtung liegt, beim Durchlaufen eines Werkstückes (von "oben" nach "unten") zunächst mit einem geringen "positiven" Versatz (z.B. X+) gegenüber seiner Sollkontur in das Werkstück eintritt, dann in der Mitte des Werkstückes diese Sollage genau einhält (X₀) und beim Austritt aus dem Werkstück einen "negativen" Versatz (X-) gegenüber dieser Sollage aufweist.

Die Erfindung erlaubt nun insbesondere die Kompensation der zu Bearbeitungsungenauigkeiten führenden Verdreh- und Auslenkfehler. Dazu werden die von der Messeinrichtung ermittelten unerwünschten Bewegungen zunächst an eine Kompensationseinrichtung weitergegeben. Die Kompensationseinrichtung bestimmt (bzw. berechnet) dann anhand der eingehenden "Bewegungsinformationen" Kompensationsbewegungen, mit deren Hilfe es möglich ist, die Genauigkeit der erosiven Bearbeitung, insbesondere des erosiven Schneidens, zu erhöhen.

Es ist natürlich auch möglich, auf dieses Weise Fehler "erster Ordnung", d.h. lineare Verschiebungen des Maschinentisches gegenüber seiner Solllage zu kompensieren. Derartige "lineare Fehler" sind allerdings teilweise bereits nach dem Stand der Technik durch lineare Korrekturen der Drahtlage auf der Basis einer Bestimmung der Werkstücklage kompensierbar.

Nach einer besonderen Weiterbildung der Erfindung ist die Kompensationseinrichtung daher speziell zur Kompensation von Verdrehungen des Maschinentisches gegenüber seiner Sollage ausgelegt (Anspruch 2). Eine derartige Auslegung läßt sich beispielsweise dadurch erreichen, daß die Kompensationseinrichtung Verschiebungen einer der Drahtführungen - z.B. in U-/V-Richtung - berechnet und an einen Zwischenspeicher oder direkt an Achsensteuereinheiten der Erosionsvorrichtung weitergibt. Die Verschiebungen führen zu einer Schrägstellung bzw. einer quasi konischen Neigung des Erodierdrahtes, die Verdrehungen des Maschinentisches zumindest weitgehend ausgleicht. Die Berechnung der Ausgleichsbewegungen erfolgt beispielsweise über Koordinatentransformationen, die mit modernen Mikroprozessoren unproblematisch sehr schnell durchführbar sind. Die Kompensation kann damit auf vorteilhafte Weise quasi in Echtzeit erfolgen.

Bei einer bevorzugten Variante der Erfindung werden anhand der ermittelten Schwingbewegungen und/oder Verdrehungen des Maschinentisches nachzuschneidende Ebenen bestimmt. Entsprechend ist die optische Messeinrichtung vorzugsweise zum Ermitteln unerwünschter Schwingbewegungen des Maschinentisches um eine Achse ausgelegt, die in der oder parallel zur X-/Y-Ebene (d.h. die Maschinentischebene) liegt (Anspruch 9). Die ermittelten, zu kompensierenden Ebenen entsprechen den jeweiligen Auslenkungen des Maschinentisches gegenüber seiner Sollage. Die ermittelten Ebenen können beispielsweise in einem Speicherelement zwischengespeichert und bei einer Nachbearbeitung berücksichtigt werden.

Bei einer weiteren vorteilhaften Ausgestaltung der Erfindung ist die Kompensationseinrichtung in die Messeinrichtung integriert (Anspruch 3). In diesem Fall wird beispielsweise ein eigener Prozessor für die Berechnung der Koordinatentransformationen verwendet. Alternativ ist es bei einer anderen bevorzugten Ausgestaltung auch möglich, die Messeinrichtung an eine CNC-Steuerung anzuschliessen, (Anspruch 4) und die Kompensationseinrichtung als Unter- und/oder Zusatzroutine eines numerischen Steuerungsprogramms auszulegen, welches ein Bestandteil der CNC-Steuerung der Erosions-Vorrichtung ist (Anspruch 5).

Weitere vorteilhafte Ausgestaltungen betreffen die Auslegung der Messeinrichtung. So ist es besonders vorteilhaft, die Messeinrichtung als optisches Messystem auszulegen (Ansprüche 6 und 11). Ein optisches Messystem ist unkompliziert in die Erosionsvorrichtung integrierbar und im Vergleich zu anderen Lösungen relativ preiswert auslegbar. Alternativ sind auch mechanische oder pneumatische Messysteme denkbar.

Eine vorteilhafte Ausgestaltung der Messeinrichtung weist einen, insbesondere vier, in einer Ecke des Maschinentisches befestigte(n) Laser auf, wobei jedem der Laser wenigstens eine Messensor-Einheit zugeordnet ist (Anspruch 7). Beispielsweise wird mit einem der Sensoren eine X-/Y-Auslenkung eines entsprechend gerichteten Lichtstrahles des am Maschinentisch befestigten Lasers registriert (denkbar ist auch eine Auslegung als optisches Interferometer) . Verdrehungen des Maschinentisches lassen sich durch ein weiteres, senkrecht zur X-/Y-Ebene angeordnetes, Messystem von Verschiebungen in der X-/Y-Ebene unterscheiden und können bei der Berechnung der Kompensationsbewegung berücksichtigt werden. Wenn der Berechnung der Koordinatentransformationen die Annahme zu Grunde gelegt wird, daß sich der Maschinentisch in sich nicht verbiegt und keine Verschiebung vorliegt, genügen diese beiden Messysteme bereits zur Bestimmung einer Kompensationsbewegung des Erodierdrahtes mit Hilfe der in U-/V-Richtung beweglichen Drahtführung.

Anstelle eines Lasers ist es auch möglich, daß die optische Messeinrichtung im wesentlichen ein Leuchtdiodenarray und entsprechende Lichtsensoren aufweist (Anspruch 8). Ein derartiger Aufbau ist beispielweise von den bereits erwähnten Drahtlagesensoren her prinzipiell bekannt und daher besonders leicht in die Maschinensteuerung integrierbar.

Die Erfindung ermöglicht zusammenfassend eine Verringerung von Erosionsfehlern, die aufgrund unerwünschter Bewegungen des Maschinentisches gegenüber dem "Maschinengestell bzw. - rumpf" auftreten. Der "Maschinenrumpf" ist ein tragendes, der Erosionsmaschine bzw. -vorrichtung Stabilität verleihendes Maschinenelement. Bei einer weitgehend in Echtzeit erfolgenden Kompensation unerwünschter Bewegungen läßt sich die Bearbeitungsgenauigkeit erhöhen. Unter Umständen werden erfindungsgemäß damit sogar zusätzliche Nachschnitte vermieden, was zu einer besseren Maschinennutzung führt.

Weitere bevorzugte Merkmale und Vorteile der Erfindung ergeben sich aus der nachfolgenden Beschreibung bevorzugter Ausführungsbeispiele. Diese Ausführungsbeispiele sind schematisch in den beigefügten Zeichnungen dargestellt, die auch den Unterschied zwischen erfindungsgemäßen Vorrichtungen und dem bereits geschilderten Stand der Technik veranschaulichen.

In den Zeichnungen zeigen:
- Fig. 1: eine schematische Ansicht eines Teilabschnittes einer erfindungsgemässen, mit einer Messeinrichtung versehenen Elektroerosionsvorrichtung;
- Fig. 2: eine schematische Ansicht einer Elektroerosionsvorrichtung, die den Effekt unerwünschter Auslenkungen des Maschinentische veranschaulicht;
- Fig. 3: eine weitere schematische Ansicht der Elektroerosionsvorrichtung aus Fig. 2, die ein erfindungsgemäßes Kompensieren unerwünschter Bewegungen des Maschinentisches veranschaulicht.

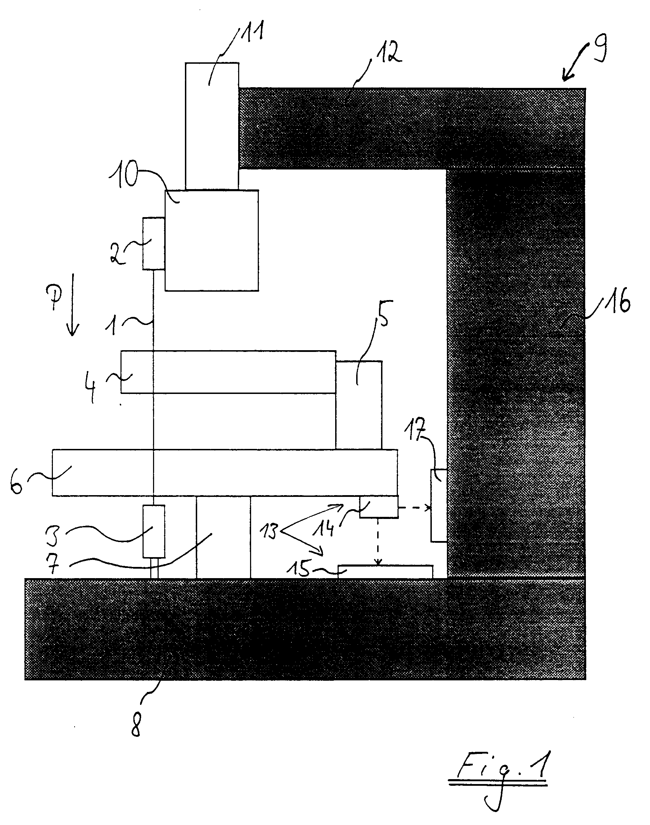

Zunächst sei das erste Ausführungsbeispiel der Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Elektroerosionsvorrichtungen bzw. -maschinen üblicher Arbeitsaufstellung und Größe sowie auf in üblicher Weise angeordnete Werkstücke.

Fig. 1 beschränkt sich auf eine rein schematische Darstellung erfindungswesentlicher Teile einer erfindungsgemäßen Elektroerosions-Schneidvorrichtung. Grundelemente wie Spülsystem und Generator sind nicht dargestellt, da sie als selbstverständlich vorausgesetzt werden.

Ein beim erosiven Schneiden mit elektrischen Impulsen beschickter Erodierdraht 1 wird zwischen einer oberen Drahtführung 2 und einer unteren Drahtführung 3 in der durch einen Pfeil P dargestellten Drahttransportrichtung von "oben" nach "unten" vorgespult. Dabei durchläuft der Erodierdraht 1 ein zu schneidendes Werkstück 4, das an einem Spannwerkzeug 5 befestigt ist. Das Spannwerkzeug 5 ist wiederum an einem Maschinentisch 6 angebracht, der über einen in X-/Y-Richtung verschieblichen Schlitten 7 mit einem unteren Sockel 8 eines C-Maschinengestells 9 verbunden ist.

Die obere Drahtführung 2 ist an einem Führungskopf 10 angeordnet, der seinerseits an einem in U-/V-Richtung beweglichen Schlitten 11 befestigt ist. Der Schlitten 11 ist an einem oberen Arm 12 des C-Maschinengestells 9 befestigt. Die untere Drahtführung 3 ist bei diesem Ausführungsbeispiel starr am unteren Sockel 8 befestigt.

Eine optische Messeinrichtung 13 zur Ermittlung bzw. Bestimmung unerwünschter Bewegungen des Maschinentisches gegenüber dem C-Maschinengestell 9 (bzw. gegenüber dem tragenden genden Maschinensockel) weist einen Laser 14 auf, dessen Lichtstrahl über einen (nicht dargestellten) halbdurchlässigen Spiegel einmal in Richtung eines am unteren Maschinensockel 8 befestigten Lichtsensors 15 und zum anderen in Richtung eines an einem Seitenträger 16 des C-Maschinengestelles 9 befestigten Lichtsensors 17 gelenkt wird.

Mit der optische Messeinrichtung 13 sind damit unerwünschte Bewegungen des Maschinentisches registrierbar, und zwar insbesondere unerwünschte Drehauslenkungen bzw. Schwingungungen. Von der optischen Messeinrichtung 13 werden Messignale an eine (nicht dargestellte) Kompensationseinrichtung weitergeleitet. Bevorzugt ist diese Kompensationseinrichtung eine Software-Unterroutine einer CNC-Steuerung, die auf der Basis der Messignale U-/V-Kompensationsbewegungen der oberen Drahtführung 2 berechnet.

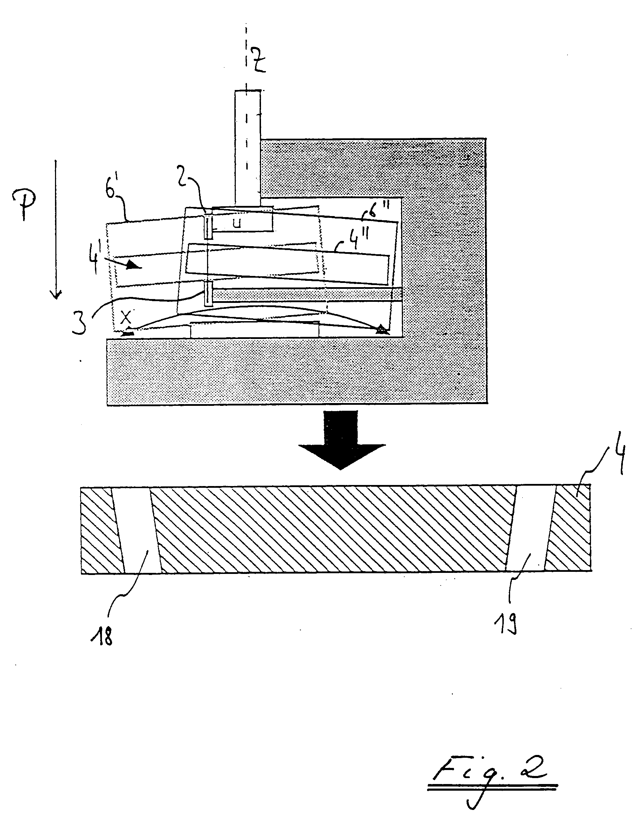

Fig. 2 veranschaulicht die unerwünschten Bewegungen des Maschinentisches. Zwar führen Drehungen des Maschinentisches genau um die Achse des Erodierdrahtes 1 oder genau um eine Achse, die senkrecht zur Vorschubachse liegt (also z.B. Drehungen um die Y-Achse bei einem Vorschub in X-Richtung) zumindest momentan nicht zu Bearbeitungsfehlern, alle anderen Drehungen des Maschinentisches führen jedoch zu Bearbeitungsungenauigkeiten.

Der Effekt einer Verdrehung des Maschinentisches wird besonders gut in Fig. 2 veranschaulicht. In dieser Fig. ist der Maschinentisch 6 nebst dem darauf befestigten Werkstück 4 einmal in eine Position 6' und einmal in eine Position 6'' gegenüber seiner Sollage verdreht. Im unteren Teil der Fig. 2 ist eine aus diesen Verdrehungen resultierende Nichtparallelität zweier Schnitte (bzw. zweier Öffnungen) 18, 19 erkennbar.

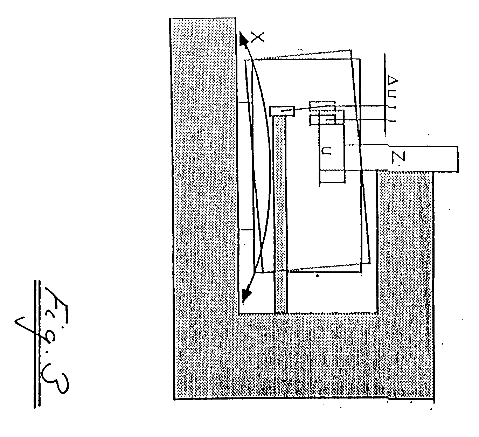

Fig. 3 veranschaulicht ein erfindungsgemäßes Verfahren zur Kompensation derartiger Abweichungen von einer Sollkontur (der Anschaulichkeit halber wurde in den Fig. 2 und 3 die Messeinrichtung nicht eingezeichnet). Die Kompensationseinrichtung berechnet zunächst anhand der von der Messeinrichtung 13 übermittelten Messignale die momentane Neigung des Maschinentisches 6 gegenüber seiner Sollage. Daraufhin bestimmt sie eine Kompensationsbewegung (bzw. hier: eine Verschiebung) der Drahtführung 2 in U-/V-Richtung, die zu einer Schrägstellung bzw. einer konischen Neigung des Erodierdrahtes führt, welche die Neigung des Maschinentisches gegenüber seiner Sollage ausgleicht. In der Schnittsituation der Fig. 3 genügt dazu eine Verschiebung der oberen Drahtführung um den Betrag ΔU.

Alternativ ist es auch möglich, die Lagefehler (lineare Fehler, Kipp- und Drehfehler, bzw. Wellenbewegungen ähnlich einem Schlingern eines Schiffes auf hoher See um die drei "Hauptachsen" des Schiffes) einmalig, z.B. am Ende des Produktionsablaufes in bestimmten Konditionen, z.B. bei belastetem Maschinentisch, auszumessen und elektronisch zu speichern (z.B. in einem EPROM). Die Kompensationseinrichtung ist dann zur Verarbeitung elektronisch gespeicherter Korrekturwerte während allen Achsbewegungen als der Sollgeometrie auf (ggf. allen Achsen X; Y; U; V; Z) überlagerte Korrekturwerte ausgelegt.

Ein besonderer Vorteil dieser Variante besteht in der Möglichkeit zur Einsparung eines permanenten Messystemes.

## Patentansprüche

1. Vorrichtung zum elektroerosiven Schneiden eines auf einem Maschinentisch (6) befestigbaren Werkstückes (4) mit einem in wenigstens einer Drahtführung (2, 3) geführten Erodierdraht (1), wobei der Maschinentisch (6) in X-, Y-Richtung und wenigstens eine Drahtführung (2, 3) hierzu in U-, V-Richtung bewegbar ist, gekennzeichnet durch
- eine Einrichtung zur Messung während der Bearbeitung auftretender Rotationsfehler des Maschinentisches (6) gegenüber seiner Sollage, sowie
- eine Einrichtung zur kontinuierlichen Kompensation dieser Rotationsfehler des Maschinentisches (6) durch Steuerung der entsprechenden Drahtführung (2, 3) in U-, V-Richtung.

2. Vorrichtung nach Anspruch 1, dadurch gekennzeichnet, daß die Kompensationseinrichtung zur Kompensation von Verdrehungen des Maschinentisches (6) gegenüber seiner Sollage, insbesondere von Verdrehungen längs der Achse oder zentrisch zur Achse des Erodierdrahtes, ausgelegt ist.

3. Vorrichtung nach Anspruch 1 oder 2, dadurch gekennzeichnet, daß die Kompensationseinrichtung in die Messeinrichtung (13) integriert ist.

4. Vorrichtung nach einem der Ansprüche 1 bis 3, dadurch gekennzeichnet, daß die Messeinrichtung (13) an eine CNC-Steuerung angeschlossen ist.

5. Vorrichtung nach Anspruch 4, dadurch gekennzeichnet, daß die Kompensationseinrichtung als Unter- und/oder Zusatzroutine eines numerischen Steuerungsprogramms ausgelegt ist, welches ein Bestandteil der CNC-Steuerung der Erosions-Vorrichtung ist.

6. Vorrichtung nach einem der vorstehenden Ansprüche, dadurch gekennzeichnet, daß die Messeinrichtung (13) als optisches Messystem ausgelegt ist.

7. Vorrichtung nach Anspruch 6, dadurch gekennzeichnet, daß die optische Messeinrichtung im wesentlichen wenigstens einen, insbesondere vier in einer Ecke des Maschinentisches befestigte(n) Laser (14) aufweist, denen jeweils wenigstens ein Messensor (15, 17) zugeordnet ist.

8. Vorrichtung nach Anspruch 6, dadurch gekennzeichnet, daß die optische Messeinrichtung (13) aus einem Leuchtdiodenarray und entsprechenden Lichtsensoren besteht.

9. Vorrichtung nach einem der vorstehenden Ansprüche, dadurch gekennzeichnet, daß die optische Messeinrichtung (13) zum Ermitteln unerwünschter Schwingbewegungen des Maschinentisches ausgelegt ist.

10. Verfahren zum elektroerosiven Schneiden eines auf einem Maschinentisch befestigbaren Werkstückes mit einem in wenigstens einer Drahtführung geführten Erodierdraht, wobei der Maschinentisch in X-, Y-Richtung und die wenigstens eine Drahtführung in U-, V-Richtung relativ zueinander bewegt werden,
dadurch gekennzeichnet, daß während der Bearbeitung des Werkstückes auftretende Rotationsfehler des Maschinentisches gegenüber seiner Sollage ermittelt und durch eine Bewegung der wenigstens einen Drahtführung in U-, V-Richtung kontinuierlich kompensiert werden.

11. Verfahren nach Anspruch 10, dadurch gekennzeichnet, daß das Ermitteln der unerwünschten Bewegungen mit Hilfe einer optischen Messeinrichtung durchgeführt wird.

12. Verfahren nach Anspruch 11, dadurch gekennzeichnet, daß als optische Messeinrichtung wenigstens ein, insbesondere vier Laser und diesen zugeordnete Messensoren verwendet wird/werden.

13. Verfahren nach einem der Ansprüche 10 bis 12, dadurch gekennzeichnet, daß die Kompensation der unerwünschten Bewegungen in einem nachträglichen Feinschnitt erfolgt.

## Claims

1. Device for electroerosive cutting of a workpiece (4) fastenable on a platen (6), having an eroding wire (1) guided in at least one wire guide (2, 3), wherein the platen (6) is movable in the X, Y direction and at least one wire guide (2, 3) is movable with respect to this in the U, V direction,
characterised in that
- a device for measuring errors of rotation of the platen (6) occurring during machining with respect to a desired position, as well as
- a device for continuous compensation of these rotation errors of the platen (6) by steering the corresponding wire guide (2, 3) in the U, V direction.

2. Device according to Claim 1, characterised in that the compensation device is designed for the compensation of twist movements of the platen (6) with respect to its desired position, especially of twist movements along the axis or centric to the axis of the eroding wire.

3. Device according to Claim 1 or 2, characterised in that the compensation device is integrated in the measuring device (13).

4. Device according to one of Claims 1 to 3, characterised in that the measuring device (13) is connected to a CNC control system.

5. Device according to Claim 4, characterised in that the compensation device is designed as a subroutine and/or additional routine of a numerical control program which is a component of the CNC control system of the erosion device.

6. Device according to one of the preceding claims, characterised in that the measuring device (13) is designed as an optical measuring system.

7. Device according to Claim 6, characterised in that the optical measuring device has essentially at least one, especially four, laser(s) (14) fastened in a corner of the platen, with which respectively at least one measuring sensor (15, 17) is associated.

8. Device according to Claim 6, characterised in that the optical measuring device (13) consists of a light emitting diode array and corresponding light sensors.

9. Device according to one of the preceding claims, characterised in that the optical measuring device (13) is designed for determining undesired oscillatory movements of the platen.

10. Method for electroerosive cutting of a workpiece fastenable on a platen, having an eroding wire guided in at least one wire guide, wherein the platen and the at least single wire guide are moved relative to one another in the X, Y direction and in the U, V direction respectively,
characterised in that rotation errors of the platen with respect to its desired position arising during the machining of the workpiece are determined and continuously compensated for by a movement of the at least single wire guide in the U, V direction.

11. Method according to Claim 10, characterised in that the determination of the undesired movements is carried out with the aid of an optical measuring device.

12. Method according to Claim 11, characterised in that for the optical measuring device at least one, especially four, laser(s) and measuring sensors associated with the latter is/are used.

13. Method according to one of Claims 10 to 12, characterised in that the compensation of the undesired movements results in a subsequent fine cut.

## Revendications

1. Dispositif de coupe par électroérosion d'une pièce (4) qu'on peut fixer sur une platine de machine (6) avec un fil d'érosion (1) guidé par au moins un guidage de fil (2, 3), où on peut déplacer la platine de machine (6) en sens X, Y, et au moins un guidage de fil (2, 3) qu'on peut déplacer en correspondance en sens U, V,
caractérisé par
- un dispositif de mesure pendant l'usinage des erreurs de rotation de la platine de machine (6) qui se produisent par rapport à sa position théorique, ainsi que par
- un dispositif de compensation en continu de cette erreur de rotation de la platine de machine (6) par commande du guidage de fil (2, 3) correspondant en sens U, V.

2. Dispositif selon la revendication 1, caractérisé en ce que le dispositif de compensation est prévu pour compenser les rotations de la platine de machine (6) par rapport à sa position théorique, notamment les rotations le long de l'axe ou centralement à l'axe du fil d'érosion.

3. Dispositif selon l'une des revendications 1 ou 2, caractérisé en ce que le dispositif de compensation est intégré dans le dispositif de mesure (13).

4. Dispositif selon l'une des revendications 1 à 3, caractérisé en ce que le dispositif de mesure (13) est raccordé à une commande CNC.

5. Dispositif selon la revendication 4, caractérisé en ce que le dispositif de compensation est conçu en sous-routine et/ou routine additionnelle d'un programme de commande numérique, qui est un composant de la commande numérique du dispositif d'érosion.

6. Dispositif selon l'une des revendications précédentes, caractérisé en ce que le dispositif de mesure (13) est réalisé en système de mesure optique.

7. Dispositif selon la revendication 6, caractérisé en ce que le dispositif de mesure optique présente essentiellement un, notamment quatre lasers (14) fixé(s) dans un coin de la platine de machine, auxquels correspondent respectivement au moins un capteur de mesure (15, 17).

8. Dispositif selon la revendication 6, caractérisé en ce que le dispositif de mesure optique est constitué d'un dispositif de diodes lumineuses et de capteurs lumineux correspondants.

9. Dispositif selon l'une des revendications précédentes, caractérisé en ce que le dispositif de mesure optique (13) est conçu pour déterminer les déplacements vibratoires indésirables de la platine de machine.

10. Procédé de coupe par électroérosion d'une pièce qu'on peut fixer sur une platine de machine avec un fil d'érosion guidé par au moins un guidage de fil, où on peut déplacer la platine de machine en sens X, Y, et au moins un guidage de fil en correspondance en sens U, V, caractérisé en ce qu'on mesure pendant l'usinage de la pièce des erreurs de rotation de la platine de machine qui se produisent par rapport à sa position théorique et on les compense en continu par déplacement d'au moins un guidage de fil en sens U, V.

11. Procédé selon la revendication 10, caractérisé en ce qu'on réalise la mesure des déplacements indésirables à l'aide d'un dispositif de mesure optique.

12. Procédé selon la revendication 11, caractérisé en ce qu'on utilise comme dispositif de mesure au moins un, notamment quatre lasers et les capteurs de mesure qui leur sont associés.

13. Procédé selon l'une des revendications 10 à 12, caractérisé en ce que la compensation des déplacements indésirables donne une découpe de précision.
